(19) Europäisches Patentamt
European Patent Office
Office européen des brevets

(11) Veröffentlichungsnummer : **0 514 673 B1**

(12) # EUROPÄISCHE PATENTSCHRIFT

(45) Veröffentlichungstag der Patentschrift :
22.09.93 Patentblatt 93/38

(51) Int. Cl.$^5$ : **B01D 53/34,** B01D 53/30

(21) Anmeldenummer : 92106751.8

(22) Anmeldetag : 21.04.92

(54) **Verfahren zur Abtrennung von Cyanwasserstoff aus Gasen und Abgasen.**

(30) Priorität : 23.05.91 DE 4116840

(43) Veröffentlichungstag der Anmeldung :
25.11.92 Patentblatt 92/48

(45) Bekanntmachung des Hinweises auf die
Patenterteilung :
22.09.93 Patentblatt 93/38

(84) Benannte Vertragsstaaten :
AT BE DE DK ES FR GB IT LU NL SE

(56) Entgegenhaltungen :
EP-A- 0 169 305
DE-A- 3 936 082
DE-C- 3 534 677
FR-A- 2 321 929
US-A- 2 859 090
US-A- 4 172 880

(73) Patentinhaber : **Degussa Aktiengesellschaft
Weissfrauenstrasse 9
D-60311 Frankfurt (DE)**

(72) Erfinder : **Fischer, Joachim
Buchbergstrasse 3
W-6458 Rodenbach 1 (DE)**
Erfinder : **Wolf, Hubert
Am Nussberg 19
W-6451 Hammersbach (DE)**
Erfinder : **Diehl, Manfred, Dr.
Zeuläckerstrasse 40
W-6000 Frankfurt 60 (DE)**

EP 0 514 673 B1

Jouve, 18, rue Saint-Denis, 75001 PARIS

## Beschreibung

Die Erfindung betrifft ein Verfahren zur Abtrennung von Cyanwasserstoff aus Gasen und Abgasen durch eine Durchlauf- oder Kreislaufwäsche mit einer wäßrigen Waschflüssigkeit, welcher zwecks Umsetzung des Cyanwasserstoffs zu Glykolnitril Formaldehyd in geregelter Weise zudosiert wird. Bei dem Verfahren, das sich insbesondere auf die Behandlung von Gasen aus Kokereien, Kohledruckvergasungen, Müllpyrolysen, Hochofenprozessen und anderen reduzierenden Verbrennungsprozessen richtet, wird nicht nur Cyanwasserstoff vollständig abgetrennt, sondern gleichzeitig eine Überdosierung von Formaldehyd vermieden.

Vor der Verwendung von z. B. Kokereigasen, Gichtgasen sowie Gasen aus Kohledruckvergasungen, Hochofenprozessen und Müllpyrolysen als Heizgase müssen diese entstaubt werden. Dies ist erforderlich, um einerseits den Auflagen der Verordnung für Großfeuerungsanlagen bezüglich Staubemissionen gerecht zu werden und andererseits, um Verkrustungen in den Heizkesseln zu verhindern, die einen starken Abfall des Wirkungsgrades bewirken würden.

Zur Entstaubung werden derartige Gase zunächst über Zyklone, dann über Elektrofilter geleitet und letztlich einer Naßwäsche unterzogen. Entsprechend den jeweiligen Inhaltsstoffen der zu reinigenden Gase stellt sich im Waschwasser ein pH-Wert ein, der von schwach sauer bis alkalisch variieren kann.

Enthalten die zu reinigenden Gase Cyanwasserstoff, so wird dieser im sauren pH-Bereich praktisch nicht entfernt und verbleibt weitgehend im Heizgas. Stellt sich dagegen bei der Gaswäsche ein schwach alkalischer Wert ein, so wird Cyanwasserstoff teilweise absorbiert, jedoch verbleibt die Hauptmenge des HCN im Gas. Werden diese so gereinigten Gase nun der Verbrennung zugeführt, so verbrennt das HCN vorzugsweise zu $NO_x$, so daß die zulässigen Grenzwerte für Großfeuerungsanlagen überschritten werden und nur durch eine nachgeschaltete DENOX-Anlage eingehalten werden könnten.

Eine Möglichkeit zur vollständigen Abtrennung von HCN besteht in der Anwendung einer Wäsche im stark alkalischen pH-Bereich. Da bei dieser Wäsche aber auch das gesamte $CO_2$ im Gas mit ausgewaschen werden müßte, wäre hierfür ein immenser Aufwand an Chemikalien erforderlich, was neben hohen Kosten auch eine nicht zu vertretende Aufsalzung des Abwassers zur Folge hätte.

Es hat sich gezeigt, daß eine Abtrennung von HCN aus Gasen sowohl im sauren als auch im alkalischen pH-Bereich möglich ist, wenn dem Waschkreislauf Formaldehyd zudosiert wird. In der DE-C-35 34 677 (bzw. der entsprechenden EP-A-0 223 904) wird ein Verfahren zur Behandlung von Abwässern aus Gaswäschen beschrieben, bei dem in einem bezüglich des pH-Wertes konditionierten Nebenstrom in Gegenwart von Ag-Ionen das cyanidspezifische Redox-Potential gemessen und entsprechend der Regelabweichung Formaldehyd in den Hauptstrom dosiert wird, um das im Waschwasser gelöste HCN beziehungsweise freie Cyanid in Glykonitril umzuwandeln. Enthält das Waschwasser aber gleichzeitig Sulfid-Ionen, wie sie aus der Wäsche von $H_2S$-haltigen Gasen von unter reduzierenden Bedingungen betriebenen Verbrennungsprozessen resultieren, und Thiocyanat, so kann die Anwesenheit von nur 1 mg Sulfid pro Liter in Kombination mit Thiocyanat - dieses kann sich leicht aus Cyanid und Sulfid bilden - ein Redoxpotential bewirken, das der Konzentration von 1 g $CN^-$/l entspricht. In diesem Falle käme es zu einer Überdosierung von Formaldehyd, was zusätzliche Kosten verursachen und einen nicht zu vertretenden Anstieg des CSB zur Folge hätte. Auch darf die Toxizität von freiem Formaldehyd gegenüber Fischen und Bakterien nicht außer acht gelassen werden.

Das genannte Dokument lehrt ferner eine oxidative Behandlung des Glykolnitril enthaltenden Abwassers mit Wasserstoffperoxid, welche entweder im Waschkreislauf oder dem aus dem Kreislauf ausgeschleusten Abwasser durchgeführt werden kann.

Aufgabe der Erfindung ist, das aus der DE-C-35 34 677 bekannte Verfahren dahingehend zu verbessern, daß sowohl Cyanwasserstoff quantitativ aus den zu waschenden Gasen abgetrennt als auch eine Überdosierung von Formaldehyd sicher vermieden werden kann. Das Verfahren sollte sich insbesondere zur Behandlung von Gasen eignen, welche außer Cyanwasserstoff zusätzlich Schwefelwasserstoff enthalten. Zusätzlich bestand auch der Wunsch nach einem weiteren Prinzip zur Regelung der Formaldehyd-Dosierung.

Gefunden wurde nun ein Verfahren zur Abtrennung von Cyanwasserstoff aus Gasen und Abgasen durch eine Durchlauf- oder Kreislaufwäsche mit einer wäßrigen Waschflüssigkeit, welcher zwecks Umsetzung des Cyanwasserstoffs zu Glykolnitril Formaldehyd als wäßrige Lösung in geregelter Weise zudosiert wird, wobei die Regelung über die Regelabweichung einer in einem Meßstrom, der von der den Gaswäscher verlassenden Waschflüssigkeit abgezweigt wird, bei konstantem pH-Wert ermittelten Meßgröße erfolgt, das dadurch gekennzeichnet ist, daß man zum Meßstrom eine wäßrige Wasserstoffperoxidlösung in einer solchen Menge zugibt, daß nach einer Kontaktzeit im Bereich von 1 bis 100 Sekunden noch freies Wasserstoffperoxid nachweisbar ist, und anschließend als Meßgröße die HCN-Tension über dem so behandelten und auf einen konstanten pH-Wert im Bereich von 2 bis 11 eingestellten Meßstrom ermittelt.

Die Unteransprüche richten sich auf bevorzugte Ausgestaltungen des Verfahrens.

Es zeigte sich, daß die HCN-Tension über einer HCN und Cyanid enthaltenden wäßrigen Lösung dem Gehalt an freiem Cyanid (HCN + CN⁻) in dieser Lösung nahezu proportional ist. Diese Abhängigkeit konnte aber nicht zu einer Steuerung der Formaldehyd-Dosierung genutzt werden, weil die Anwesenheit reduzierend wirkender Stoffe, welche sich wie HCN in der wäßrigen als auch in der Gasphase befinden können, die Messung der HCH-Tension stark beeinflußt und zu fehlerhaften Ergebnissen führt. Als besonders störend erwies sich Schwefelwasserstoff, der fast immer in unter reduzierenden Bedingungen aus schwefelhaltigen Brennstoffen gewonnenen Gasen enthalten ist. Durch Anhebung des pH-Werts der Lösung, beispielsweise auf 12, kann zwar die Interferenz des Schwefelwasserstoffs weitgehend unterdrückt werden, gleichzeitig wird aber die HCN-Tension so stark herabgesetzt, daß damit eine sichere Steuerung der Formaldehyd-Dosierung nicht mehr gewährleistet ist. Überraschenderweise konnte durch Einstellung eines konstanten pH-Wertes und Zugabe einer ausreichenden Menge an wäßriger Wasserstoffperoxidlösung die störende Wirkung von $H_2S$ auf die Messung der HCN-Tension behoben werden. Die dem Cyanidgehalt proportionale HCN-Tension kann durch die erfindungsgemäße Vorbehandlung der zu messenden Lösung zur bedarfsgerechten Dosierung von Formaldehyd in die wäßrige Waschflüssigkeit genutzt werden.

Zur Gaswäsche, welche als Durchlauf- oder Kreislaufwäsche ausgeführt werden kann, eignen sich übliche Gaswäscher, etwa Rieseltürme, Füllkörperkolonnen, Bodenkolonnen sowie Absorptionsmaschinen mit und ohne bewegte Teile. Eine Gaswäsche kann einen oder mehrere, gegebenenfalls hintereinander geschaltete Gaswäscher enthalten. Um mit möglichst wenig Waschwasser auszukommen, wird eine Kreislaufwäsche bevorzugt, wobei die Waschflüssigkeit im Kreis gefahren und nur ein Anteil der Waschflüssigkeit zur weiteren Entsorgung ausgeschleust wird. Sofern erforderlich, umfaßt ein Waschkreislauf auch eine Vorrichtung zur Kühlung der Waschflüssigkeit vor Wiedereintritt derselben in den/die Gaswäscher. Es ist zweckmäßiger, das bei der Wäsche gebildete, im Waschwasser gelöste Glykolnitril oxidativ, vorzugsweise durch Behandlung mit Wasserstoffperoxid bei pH-Werten im Bereich von 8,5 bis 12,5 , insbesondere um 10,5 , abzubauen. Diese oxidative Behandlung kann in den Waschkreislauf integriert werden oder mit der den Gaswäscher verlassenden oder aus einem Waschkreislauf ausgeschleusten Waschflüssigkeit durchgeführt werden; die Oxidation mit Wasserstoffperoxid läßt sich in bekannter Weise potentiometrisch steuern.

Zweckmäßigerweise erfolgt die Formaldehydzugabe zur Wachflüssigkeit vor Eintritt derselben in den/die Gaswäscher. Auf diese Weise wird Cyanwasserstoff während der Wäsche quantitativ in Glykolnitril überführt, bevor das Cyanid mit eventuell vorhandenen Schwermetallen schwer entgiftbare Schwermetallcyanokomplexe bilden kann.

Der Meßstrom wird von der den/die Gaswäscher verlassenden Waschflüssigkeit abgezweigt. Das Volumenverhältnis des Meßstroms zum Hauptstrom liegt im allgemeinen im Bereich von 1 zu 100 bis 1 zu 10000. Im Prinzip kann als Meßstrom auch der gesamte Waschflüssigkeitsstrom verwendet werden, jedoch ist dies in der Regel nachteilig, weil der gesamte Strom auf einen konstanten pH-Wert gebracht und zudem eine entsprechend große Menge Wasserstoffperoxid zudosiert werden müßte.

Der pH-Wert im Meßstrom kann zwischen 2 und 11 auf einen konstanten Wert eingestellt werden, bevorzugt wird ein Wert zwischen pH 5 und 9, insbesondere zwischen 6 und 7. Zur Einstellung des pH-Wertes können übliche Säuren und Basen eingesetzt werden, vorzugsweise Mineralsäuren und Alkalilaugen.

Durch die Behandlung des Meßstromes mit Wasserstoffperoxid - eingesetzt wird wäßriges Wasserstoffperoxid beliebiger Konzentration, bevorzugt etwa 30 bis 70 gew.-%iges $H_2O_2$ - werden die die HCN-Tensionsmessung störenden Bestandteile des Waschwassers durch Oxidation unschädlich gemacht. Die Oxidation von $H_2S$ und Sulfid mit $H_2O_2$ verläuft praktisch augenblicklich, so daß eine Verweilzeit, wie sie zur gleichmäßigen Durchmischung der wäßrigen $H_2O_2$-Lösung mit dem Meßstrom erforderlich ist, in der Regel ausreicht, um eine störungsfreie HCN-Tensionsmessung vornehmen zu können. Wenn nach einer praxisüblichen Durchmischungszeit von 1 bis 100 Sekunden, meist nur einigen Sekunden, noch Wasserstoffperoxid nachweisbar ist, kann die HCN-Tensionsmessung durchgeführt werden. Zweckmäßigerweise wird die $H_2O_2$-Dosierung so eingestellt, daß nach der Oxidation der unter den angegebenen Bedingungen leicht oxidierbaren Komponenten der Meßstrom in der Meßzelle der HCN-Tensionsmessung noch 20 bis 200 mg $H_2O_2$/l, vorzugsweise 100 ± 50 mg $H_2O_2$/l, enthält. Es ist ausreichend, einen $H_2O_2$-Überschuß mittels beispielsweise handelsüblicher Teststäbchen nachweisen zu können. Unter den Bedingungen der Oxidation findet praktisch keine Reaktion zwischen noch anwesendem freiem Cyanid und $H_2O_2$ unter Bildungen von Cyanat statt. Der, wie angegeben, konditionierte und auf einen konstanten pH-Wert eingestellte Meßstrom wird in eine Meßzelle zur Bestimmung der HCN-Tension geleitet. Sofern größere Temperaturschwankungen im Meßstrom auftreten, sollte die Meßzelle thermostatisiert werden. Als HCN-Meßgerät eignen sich HCN-sensitive Gasmeßgeräte, etwa das HCN-Meßgerät, Typ Compur Statox, Fabrikat Bayer Diagnostic, mit einem Meßbereich von 0 bis 30 ppm HCN und einem Analogausgang von 0 bis 1 V. Dieser 0 bis 1 V-Ausgang wird mit einem elektronischen Regler mit P-(proportional), PI- (proportional-integral) oder PID- (proportional-integral-differential)-Verhalten oder mittels einer speicherprogrammierbaren Steuerung in ein digitales 0 bis 20 mA-Signal umgewandelt, das zur Ansteuerung und Regelung entsprechend der Sollwertabweichung des Potentials einer Formaldehyd-Dosiereinrichtung, etwa einer Hubverstellung einer Dosierpumpe, zur bedarfsgerechten Formaldehyd-Dosierung genützt wird.

Das erfindungsgemäße Verfahren führt zu einer quantitativen Abtrennung des HCN aus Gasen und Abgasen mit wechselnden Gehalten an HCN und gegebenenfalls anderen Schadstoffen, wie $H_2S$. Ein Formaldehydüberschuß wird durch das neue Regelungskonzept sicher vermieden, so daß der CSB-Gehalt des Abwassers nicht unnötigerweise erhöht wird. Durch die Steuerung des Verfahrens über eine in einem Meßstrom ermittelte Meßgröße, bedarf es nur einer Konditionierung des im allgemeinen sehr kleinen Meßstroms, nicht aber der Hauptmenge des den Wäscher oder Waschkreislauf verlassenden Waschwassers.

Die Erfindung wird durch die nachfolgenden Beispiele weiter verdeutlicht.

**Beispiel 1**

In Beispiel 1 wird gezeigt, welchen Einfluß die $H_2CO$-Dosierung auf die Absenkung der HCN-Tension ausübt.

4 l Leitungswasser wurden in einem 5 l-Rundkolben, versehen mit einem Rührer, Füllkörperkolonne und Thermosteuerung, auf pH 6,5 eingestellt und auf 50 °C thermostatisiert. Nun wurden 20 mg $CN^-$/l als NaCN zugegeben, der pH-Wert nachgestellt, 2 l Wasser pro Stunde über die Füllkörperkolonne umgewälzt und im Gegenstrom 2 m³ Luft pro Stunde über der Flüssigkeitsoberfläche des Rundkolbens zugegeben. Damit wurden die Verhältnisse in einem Verdampfungskühler nachgestellt.

In Abständen von jeweils 10 Minuten wurden jeweils 25 % der Theorie an $H_2CO$, bezogen auf das gesamte im Rundkolben enthaltende Cyanid, zugegeben und vor der jeweils nächsten $H_2CO$-Zugabe die HCN-Tension direkt über der Füllkörperkolonne mit einem HCN-Meßgerät, Typ Compur Monitox SD, HCN, Fabrikat Bayer Diagnostic gemessen. Die in der Tabelle 1 aufgeführten Meßwerte zeigen, daß mit zunehmender $H_2CO$-Dosierung eine nahezu kontinuierliche Abnahme der HCN-Tension festzustellen ist.

Tabelle 1

| $H_2CO$ % der Theorie, bezogen auf Gesamtcyanid | HCN ppm in der Abluft |
|---|---|
| 0 | 18,0 |
| 25 | 14,0 |
| 50 | 9,7 |
| 75 | 5,8 |
| 100 | 2,1 |
| 112 | 0 |

(Extrapolation der Geraden)

**Beispiel 2**

In Beispiel 2 soll die Wirksamkeit der $H_2CO$-Dosierung zur Absenkung der HCN-Tension im Betriebsmaßstab demontiert werden.

Ein Abwasserstrom aus einer Gichtgas-Kreislaufwäsche von 1300 m³/h, der durchschnittlich 240 mg $CN^-$/l und zusätzlich bis zu 50 mg $S^{2-}$/l und bis zu 2000 mg $SCN^-$/l enthielt, und einen pH von 6 bis 9 aufwies, wurde mit fest eingestellten Dosiermengen an wäßrigem Formaldehyd (37 Gew.-%) versetzt und diese Dosiermengen über jeweils eine Stunde konstant gehalten.

Mit einer Schlauchpumpe wurde dem Hauptstrom vor Einlauf in das Rundklärbecken ein Meßstrom von ca. 100 l Abwasser pro Stunde entnommen, diese mit 50 ml $H_2O_2$, 35 Gew.-%, pro Stunde versetzt und automatisch gesteuert auf pH 6,5 konstant gehalten. Der so konditionierte Meßstrom wurde nun durch ein Rühr-

4

gefäß geleitet, das mit einem HCN-Meßgerät Compur Statox ausgerüstet war. Nun wurden direkt nach dem Gaswäscher 550, 770, 800 und 880 l wäßrige Formaldehydlösung (37 Gew.-%) zudosiert, die HCN-Tension bei 50 °C überwacht und nach einer Stunde Dosierzeit die endgültige HCN-Tension gemessen.

Die Reaktionszeit von der $H_2CO$-Dosierstelle bis zur Entnahme des Meßstroms betrug ca. 40 Sekunden. Bereits 60 Sekunden nach dem Beginn der $H_2CO$-Dosierung war ein deutlicher Abfall der gemessenen HCN-Tension sichtbar, und die verbliebene HCN-Tension hatte sich bereits nach 90 Sekunden stabilisiert. Die Meßwerte der Tabelle ergeben einen linearen Verlauf der HCN-Tension in Abhängigkeit von der $H_2CO$-Dosierung.

## Tabelle 2

| Formaldehyd (37 Gew.-%) l | HCN-Tension ppm |
|---|---|
| 0 | 240 |
| 550 | 96 |
| 750 | 50 |
| 800 | 30 |
| 880 | 2 |

**Beispiel 3**

Mit Beispiel 3 soll die Möglichkeit der sicheren Steuerung der bedarfsgerechten $H_2CO$-Dosierung im Betriebsmaßstab aufgezeigt werden.

Einem Abwasserstrom gemäß Beispiel 2 (Betriebstemperatur ca. 50 °C) wurde ein kleiner Meßstrom (100 l/h) entnommen, mit 50 ml wäßrigem $H_2O_2$ (35 Gew.-%) versetzt und automatisch gesteuert auf pH 6,5 konstant gehalten. Der so konditionierte Meßstrom wurde nun durch ein Rührgefäß geleitet, das mit einem HCN-Meßgerät Compur Statox, (Firma Bayer Diagnostic), Meßbereich 0 bis 30 ppm HCN = 0 bis 1 V-Analogausgang, ausgerüstet war. Der 0 bis 1 V-Analogausgang wurde an einen elektronischen Regler (Typ PR 12, Fabrikat Dr. Kuntze, Düsseldorf) angeschlossen und in einen digitalen 0 bis 20 mA-Ausgang umgewandelt. Die Einstellung am Regler wird so vorgenommen, daß bei einem Eingang von 100 mV 20 mA-Regelausgang und bei einem Eingang von 0 mV 0 mA-Regelausgang erhalten wurden. Der Regelausgang von 0 bis 20 mA wurde in der angegebenen Weise für die Ansteuerung einer automatischen Hubverstellung einer Dosierpumpe (Typ Makro TZ 6 HM 15-120/8, Fabrikat ProMinent) verwendet. Der Regelausgang von 0 bis 20 mA entspricht einer Dosierleistung von 0 bis 1000 l/h.

Die Regeleinstellung wurde deshalb so vorgenommen, weil der zulässige Grenzwert für HCN 5 ppm entsprach und bei einem Meßbereich von 0 bis 30 ppm und 1000 mV Analogausgang des HCN-Meßgerätes 100 mV erst 3 ppm HCN entsprechen und somit der zulässige Grenzwert sicher unterschritten wird.

Analysen des behandelten Abwassers haben gezeigt, daß über einen Zeitraum von 24 Stunden der maximale $H_2CO$-Gehalt (photometrische Bestimmung nach Hantzsch) im Abwasser bei 3.6 mg/l lag; der Durchschnitt betrug 1,1 mg $H_2CO$/l. Die HCN-Tension am Kühlturm war stets < 5 ppm. Aus dem Kühlkreislauf wurde stets nach dem Kühler ein kleiner Teil des Waschwassers zur oxidativen Nachbehandlung mit $H_2O_2$ ausgeschleust und durch Frischwasser ersetzt.

**Beispiel 4**

Mit Beispiel 4 soll die Möglichkeit der sicheren Entfernung von HCN durch automatisch gesteuerte $H_2CO$-Dosierung demonstriert werden.

Einem Waschkreislauf einer Kohledruckvergasung mit einer Umwälzung von 36 m³/h, einer Temperatur von 120 °C und einem Druck von 36 bar wurde ein Meßstrom von 50 l/h entnommen. Der Meßstrom wurde über einen Schlangenkühler auf Raumtemperatur gekühlt, pro Stunde mit 100 ml $H_2O_2$-Lösung (35 Gew.-%)

versetzt und der pH-Wert automatisch gesteuert auf 6,5 konstant gehalten. Dieser so konditionierte Meßstrom wurde nun durch ein Rührgefäß geleitet und mit einem HCN-Meßgerät (Compur Monitox SD, HCN) die HCN-Tension überwacht. Die Leistung der Lewa-Dosierpumpe zur Dosierung von wäßriger $H_2CO$-Lösung vor dem Wäscher in die Waschflüssigkeit wurde dabei so eingeregelt, daß die HCN-Tension zwischen 1 und 5 ppm HCN gehalten werden konnte. Die analytische Überwachung der HCN-Konzentration im Reingas durch Gaschromatographie ergab bei Anfangsgehalten zwischen 50 und 100 ppm HCN über einen Zeitraum von 10 Stunden stets eine Restkonzentration von kleiner 5 ppm HCN. Der durchschnittliche $H_2CO$-Bedarf lag hier bei 5 l wäßriger $H_2CO$-Lösung (37 Gew.-%) pro Stunde. Der analytisch erfaßte Formaldehyd-Restgehalt im ausgeschleusten Abwasser lag stets unter 1 mg/l; durch gleichzeitige Anwesenheit von Ammoniak im Abwasser lag der analytisch erfaßte Formaldehyd in Wirklichkeit als Urotropin vor.

## Patentansprüche

1. Verfahren zur Abtrennung von Cyanwasserstoff aus Gasen und Abgasen durch eine Durchlauf- oder Kreislaufwäsche mit einer wäßrigen Waschflüssigkeit, welcher zwecks Umsetzung des Cyanwasserstoffs zu Glykolnitril Formaldehyd als wäßrige Lösung in geregelter Weise zudosiert wird, wobei die Regelung über die Regelabweichung einer in einem Meßstrom, der von der den Gaswäscher verlassenden Waschflüssigkeit abgezweigt wird, bei konstantem pH-Wert ermittelten Meßgröße erfolgt,
dadurch gekennzeichnet,
daß man zum Meßstrom eine wäßrige Wasserstoffperoxidlösung in einer solchen Menge zugibt, daß nach einer Kontaktzeit im Bereich von 1 bis 100 Sekunden noch freies Wasserstoffperoxid nachweisbar ist, und anschließend als Meßgröße die HCN-Tension über dem so behandelten und auf einen konstanten pH-Wert im Bereich von 2 bis 11 eingestellten Meßstrom ermittelt.

2. Verfahren nach Anspruch 1,
dadurch gekennzeichnet,
daß man den pH-Wert des Meßstroms auf einen konstanten Wert im Bereich von 5 bis 9, insbesondere 6 bis 7, einstellt.

3. Verfahren nach Anspruch 1 oder 2,
dadurch gekennzeichnet,
daß man die Gaswäsche in einem Waschkreislauf mit einem oder mehreren Gaswäschern durchführt und Formaldehyd vor Eintritt der Waschflüssigkeit in den/die Gaswäscher der Waschflüssigkeit zudosiert.

4. Verfahren nach einem oder mehreren der Ansprüche 1 bis 3,
dadurch gekennzeichnet,
daß man Wasserstoffperoxid in einer solchen Menge dem Meßstrom zugibt, daß in der Meßzelle zur Bestimmung der HCN-Tension noch 20 bis 200 mg $H_2O_2$ pro l des Meßstroms enthalten sind.

5. Verfahren nach einem oder mehreren der Ansprüche 1 bis 4,
dadurch gekennzeichnet,
daß man den Analogausgang eines kontinuierlich messenden Geräts zur Bestimmung der HCN-Tension auf einen elektronischen Regler mit P-, PI- oder PID-Verhalten oder eine speicherprogrammierbare Steuerung schaltet und die Dosiervorrichtung für die wäßrige Formaldehydlösung entsprechend der Solwertabweichung des Potentials ansteuert und regelt.

6. Verfahren nach einem oder mehreren der Ansprüche 1 bis 5,
dadurch gekennzeichnet,
daß man die den Gaswäscher verlassende Waschflüssigkeit innerhalb eines Waschkreislaufs oder aus dem Gaswäscher oder dem Waschkreislauf ausgeschleuste Waschflüssigkeit oxidativ, vorzugsweise unter Verwendung von Wasserstoffperoxid, behandelt.

## Claims

1. A process for the separation of hydrogen cyanide from gases and waste gases by a throughflow scrubbing or circulation scrubbing with an aqueous scrubbing liquid to which formaldehyde in the form of an aqueous solution is added at a controlled rate for conversion of the hydrogen cyanide into glycol nitrile, the rate being controlled by the deviation of a measured value determined at a constant pH in a measuring stream which is branched off from the scrubbing liquid leaving the gas scrubber, characterised in that an aqueous hydrogen peroxide solution is added to the measuring stream in such a quantity that free hydrogen peroxide can still be detected after a contact time in the range of from 1 to 100 seconds, and the HCN tension across the measuring stream which has been thus treated and adjusted to a constant pH of from 2 to 11 is then determined as the measured value.

2. A process according to Claim 1, characterised in that the pH of the measuring stream is adjusted to a constant value of from 5 to 9, in particular 6 to 7.

3. A process according to Claim 1 or Claim 2, characterised in that the gas scrubbing is carried out in a scrubbing circulation with one or more gas scrubbers and formaldehyde is added to the scrubbing liquid before entry of said scrubbing liquid into the gas scrubber(s).

4. A process according to one or more of Claims 1 to 3, characterised in that hydrogen peroxide is added in such a quantity to the measuring stream that the measuring cell for determining the HCN tension still contains from 20 to 200 mg of $H_2O_2$ per litre of measuring stream.

5. A process according to one or more of Claims 1 to 4, characterised in that the analog output of a continuously measuring apparatus for determining the HCN tension is switched to an electronic control operating at P, PI or PID mode or a stored program control and the dosing device for the aqueous formaldehyde solution is activated and controlled according to the deviation of the potential from the nominal value.

6. A process according to one or more of claims 1 to 5, characterised in that the scrubbing liquid leaving the gas scrubber within a scrubbing circulation or flushed out of the gas scrubber or the scrubbing circulation is treated oxidatively, preferably using hydrogen peroxide.

**Revendications**

1. Procédé de séparation d'acide cyanhydrique, des gaz et des gaz d'échappement par des lavages en flux continu ou en circuit avec un liquide de lavage aqueux auquel en vue de la conversion de l'acide cyanhydrique en nitrile glycolique du formaldéhyde sous forme de solution aqueuse est ajouté par fractions d'une manière commandée, dans laquelle la régulation s'effectue par l'intermédiaire de la déviation de réglage d'une grandeur de mesure déterminée à valeur de pH constant dans un courant de mesure qui est dérivé du liquide de lavage qui part du laveur de gaz, caractérisé en ce que l'on ajoute au courant de mesure une solution aqueuse de peroxyde d'hydrogène en quantité telle, qu'après un temps de contact dans la plage de 1 à 100 secondes, du peroxyde d'hydrogène libre est encore détectable et ensuite comme grandeur de mesure, on détermine la tension de CNH sur le courant de mesure ainsi traité et ajusté à une valeur de pH constante dans la zone de 2 à 11.

2. Procédé selon la revendication 1, caractérisé en ce que 'on ajuste la valeur du pH du courant de mesure à une valeur constante dans la zone de 5 à 9, en particulier de 6 à 7.

3. Procédé selon la revendication 1 ou 2, caractérisé en ce que l'on effectue les lavages de gaz dans un circuit de lavage avec un ou plusieurs laveurs de gaz et que l'on ajoute par portions le formaldéhyde avant l'entrée du liquide de lavage dans le ou les laveurs de gaz du liquide de lavage.

4. Procédé selon une ou plusieurs des revendications 1 à 3, caractérisé en ce que l'on ajoute du peroxyde d'hydrogène au courant de mesure en quantité telle que dans la cellule de mesure pour la détermination de la tension de CNH, encore 20 à 200 mg de $H_2O_2$ par litre de courant de mesure sont contenus.

5. Procédé selon une ou plusieurs des revendications 1 à 4, caractérisé en ce que l'on connecte la sortie analogique d'un appareil à mesurer en continu pour la détermination de la tension de CNH à un régulateur électronique avec un comportement P, PI ou PID ou à une commande d'enregistrement programmable et que l'on dirige le dispositif d'admission dosée pour la solution aqueuse de formaldéhyde conformément à la déviation de valeur de consigne du potentiel et qu'on le régule.

6. Procédé selon une ou plusieurs des revendications 1 à 5, caractérisé en ce que l'on traite par oxydation le liquide de lavage qui quitte le laveur de gaz à l'intérieur d'un cycle de lavage ou du liquide de lavage évacué du laveur de gaz ou du circuit de lavage, de préférence en utilisant du peroxyde d'hydrogène.